# EUROPEAN PATENT APPLICATION

(11) **EP 4 640 400 A1**
(43) Date of publication of application: **29.10.2025**
(21) Application number: 25170311.2
(22) Date of filing: 14.04.2025
(51) Int. Cl.: B29C 45/16, B29D 35/12

(54) **INJECTION MOLDING DEVICE FOR MOLDING A SOLE ONTO THE UPPER OF A SHOE**

(30) Priority: 22.04.2024 IT 202400009160
(71) Applicant: S.F.B. S.r.l., 76121 Barletta (IT)
(72) Inventor: SCARNERA, Felice, 76121 Barletta (IT); SCARNERA, Benedetto, 76121 Barletta (IT)
(74) Representative: Rapisardi, Mariacristina

(57) **Abstract**

An injection molding device (1) for molding a sole (3, 4, 5) onto the upper (2) of a shoe, comprising a tread layer (3), at least one intermediate layer (4), and an inner layer (5) directly connected to the upper (2), the device (1) including a head (7) equipped with actuating means (20, 21, 22) to define a first molding cavity (17) for molding the tread layer (3), a second molding cavity (18) for molding the intermediate layer (4), and a third molding cavity (19) for molding the inner layer (5), the head (7) featuring a first closing form (8) for the first molding cavity (17), a second closing form (9) for the second molding cavity (18), a third support form (10) for the upper (2) to close the third molding cavity (19), and an articulated block (11, 12, 13) comprising a first blocking part (11) slidably supported along a fixed guide (14), a second blocking part (12) supported by the first blocking part (11) and rotatable around a first rotation axis (L), and a third blocking part (13) supported by the second blocking part (12) and rotatable around a second rotation axis (M), wherein the third blocking part (13) has a first arm (15) for securing the first form (8) and a second arm (16) for securing the second form (9), and wherein the third support form (10) is fixed to the second blocking part (12), the head (7) being angularly movable around the first and second rotation axes (L, M) to selectively align the corresponding closing form (8, 9, 10) with each molding cavity (17, 18, 19).

## Description

The present invention relates to an injection molding device for molding a sole onto the upper of a shoe.

More specifically, the present invention concerns a device for manufacturing footwear with multilayer soles through direct injection onto the upper.

Even more particularly, the present invention relates to a device for producing footwear with three-layer soles via direct injection onto the upper.

It is known that footwear with a sole composed of three different layers can be manufactured using a direct injection process onto the upper.

In this type of footwear, the sole generally includes an outsole, preferably made of rubber or thermoplastic polyurethane (TPU), and a midsole, usually made of polyurethane, preferably of the expanded type.

The midsole, in turn, may comprise a first layer and a second layer, which, in addition to having different shapes and sizes, may be made with different colors and materials depending on the aesthetic and mechanical properties required for the sole.

A molding method for manufacturing such footwear involves initially producing, using a first mold, a component consisting of the outsole and the first layer of the midsole.

In this case, the outsole can be made of rubber or TPU, while the first layer of the midsole is preferably made of polyurethane. This component is subsequently loaded into a second mold, which consists of a base, a pair of half-rings, and a mold form, onto which the shoe upper is placed. This second mold is preferably mounted on a mold-holding station of a rotary or static machine. The half-rings are designed to close with their lower edge on the base of the mold and with their upper edge against the upper, fitted onto the mold form, thus defining a mold cavity with the shape and dimensions of the second layer of the midsole.

A polymeric material is then injected into this cavity to form the second layer and complete the sole.

This method entails a significant cost for purchasing or manufacturing the component consisting of the outsole and the first layer of the midsole.

Furthermore, to ensure adhesion between this component and the polymeric material subsequently injected to complete the sole, it is necessary to treat the upper surface of the component-intended to come into contact with the second layer-by applying adhesives or performing a roughening operation.

The prior art is further described in patents EP0407688, IT201700108402A1, and IT201800009893A1.

However, existing devices are either poorly automated or inefficiently automated, resulting in low productivity of the machinery used for footwear production.

The lack of automation is due to the complexity of these devices as well as the high cost of automating them.

Additionally, existing devices are particularly bulky and require extensive angular and/or linear movements of their components to achieve the various operational configurations.

The technical objective of the present invention is, therefore, to develop an injection molding device that eliminates the technical drawbacks of the known techniques.

Within this technical objective, one aim of the invention is to create an injection molding device that is automated in a simple yet effective manner, thereby keeping the overall cost of the device low.

This would significantly increase the productivity of the injection molding device.

Another aim of the invention is to provide a compact molding device configured to operate with minimal movement of its operational components, thereby simplifying their actuation.

The technical objective, along with these and other aims, is achieved by developing an injection molding device as defined in claim 1.

Additional features of the present invention are further defined in the subsequent claims.

Further characteristics and advantages of the invention will become more evident from the description of a preferred but non-exclusive embodiment of the injection molding device, presented for illustrative and non-limiting purposes in the accompanying drawings, in which:

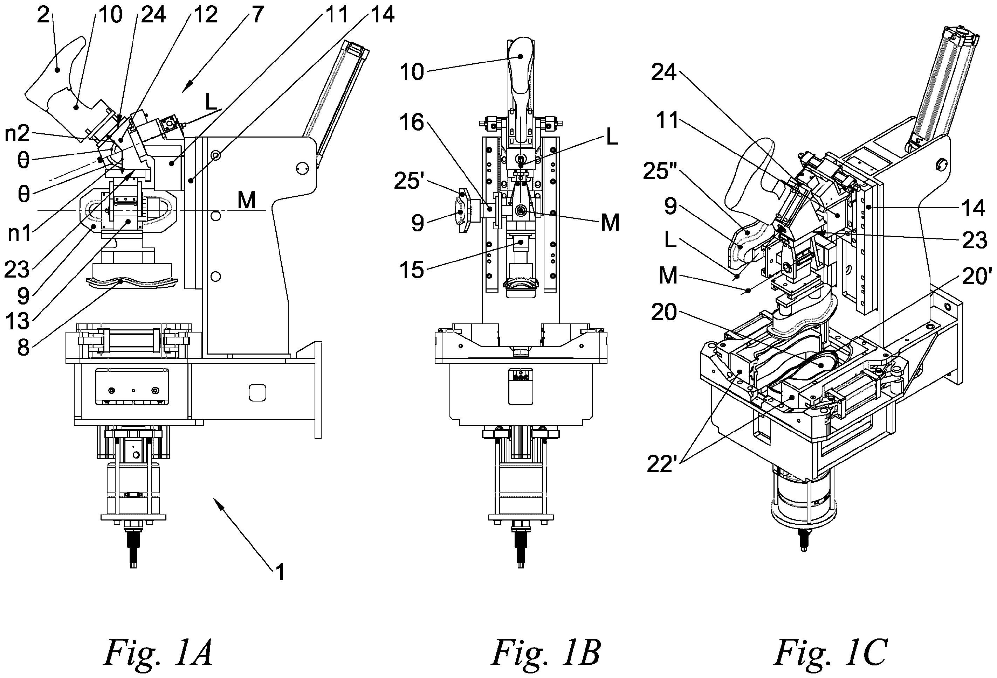

Figures 1A, 1B, and 1C show the injection molding device from three different angles (side view, front view, perspective view) before the molding operation, with the first closing mold positioned vertically above the female mold.

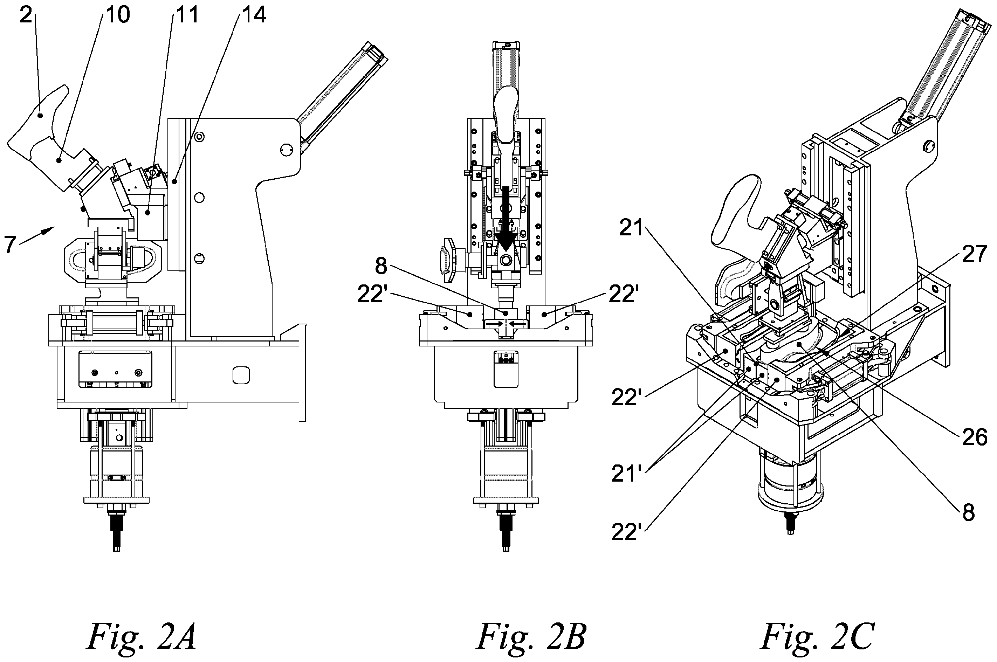

Figure 2 shows the injection molding device from three different angles (side view, front view, perspective view) after the lowering of the first closing mold and the closure of the first ring.

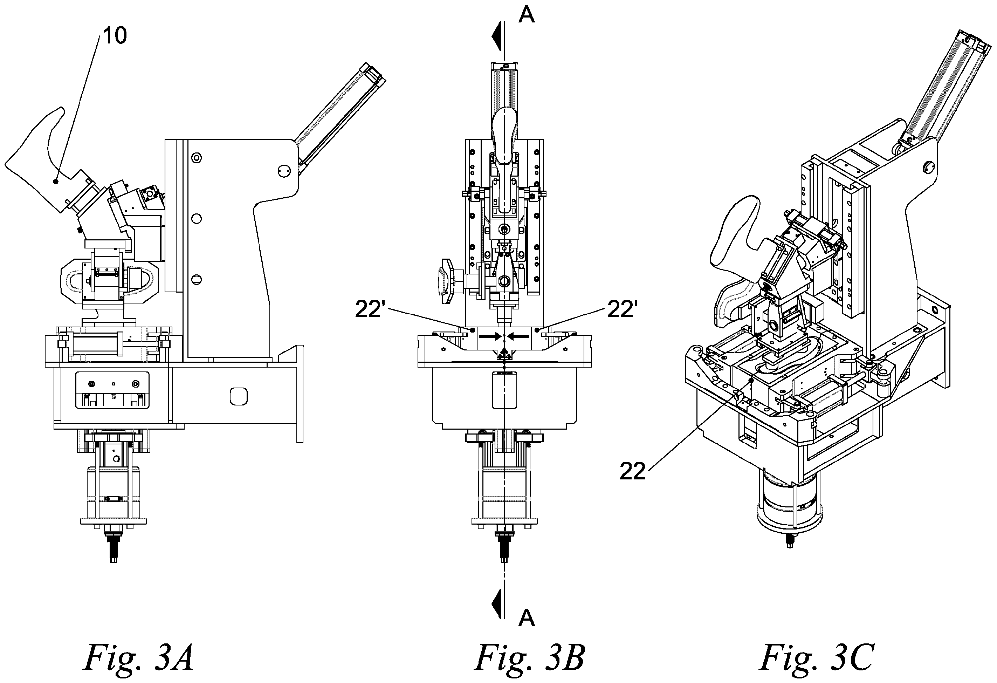

Figures 3A, 3B, and 3C show the injection molding device from three different angles (side view, front view, perspective view) after the closure of the second ring in the molding configuration for the tread layer.

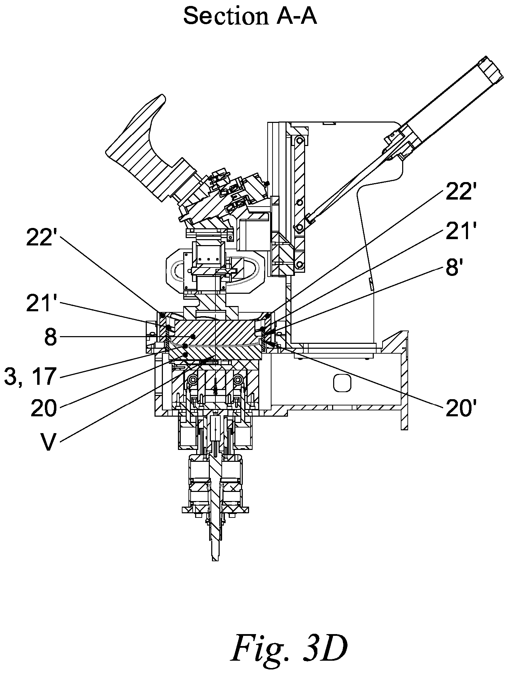

Figure 3D shows the injection molding device sectioned along line A:A of Figure 3B.

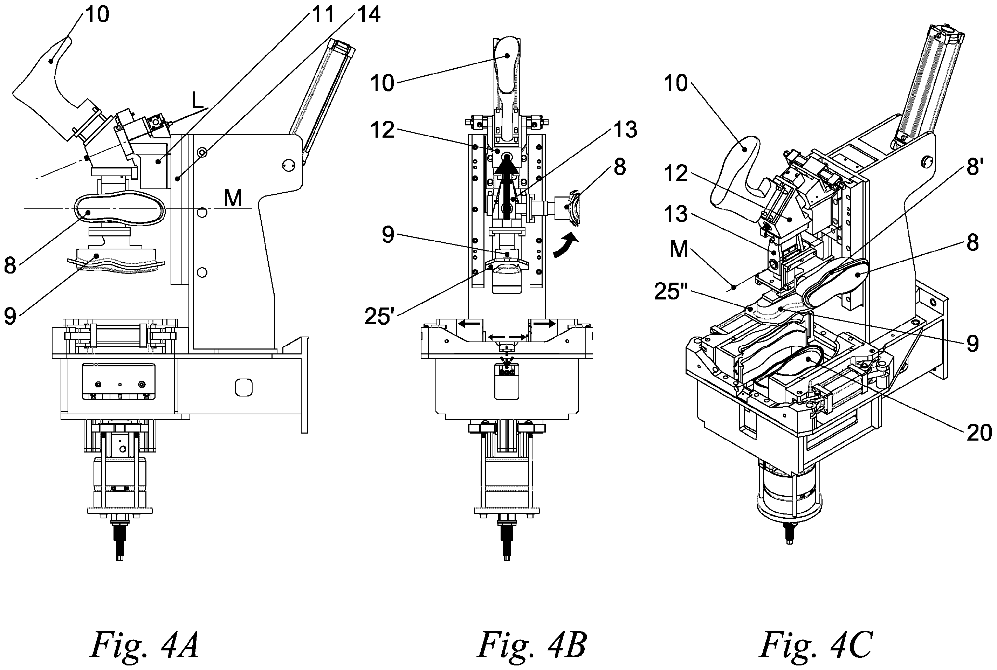

Figures 4A, 4B, and 4C show the injection molding device from three different angles (side view, front view, perspective view) after the opening of the two rings, the lifting of the first closing mold, and the rotation of the third locking part around the second rotation axis to position the second closing mold vertically above the female mold.

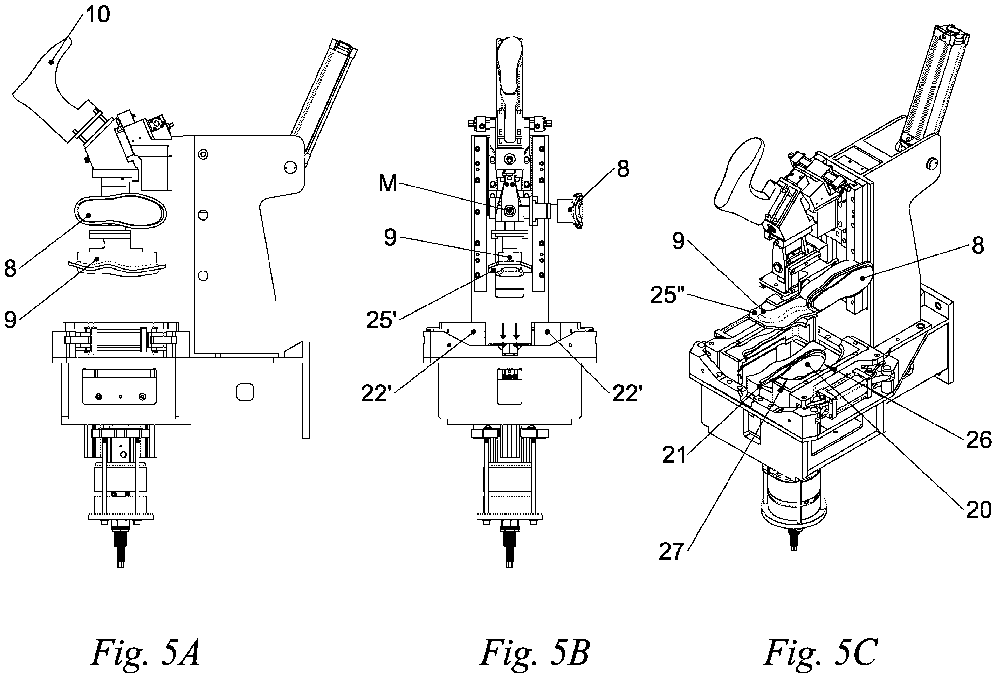

Figures 5A, 5B, and 5C show the injection molding device from three different angles (side view, front view, perspective view) after the lowering and closure of the first ring.

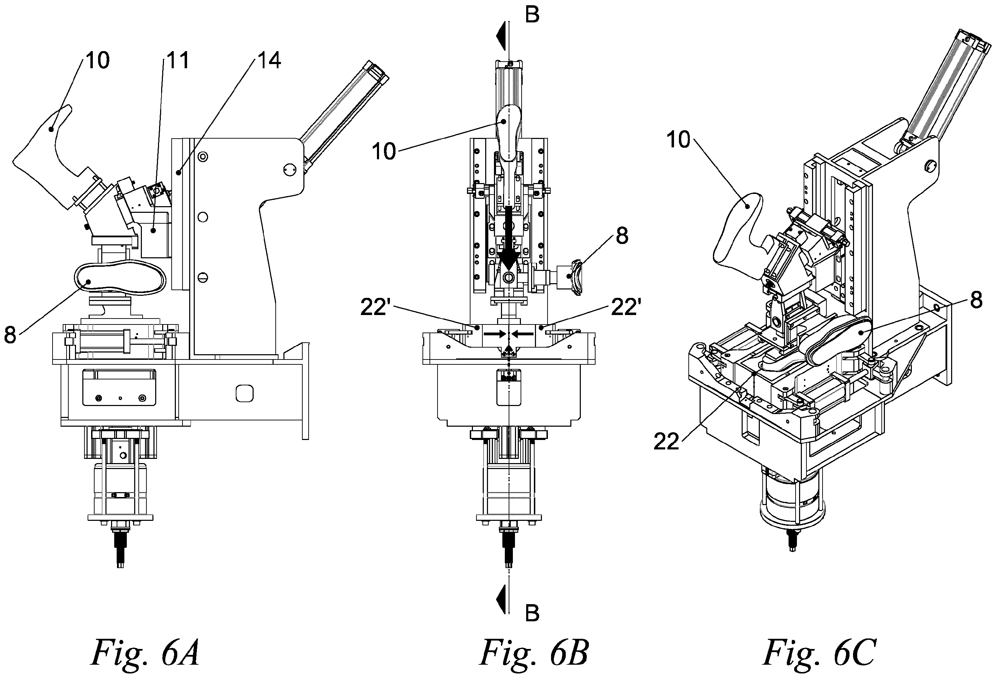

Figures 6A, 6B, and 6C show the injection molding device from three different angles (side view, front view, perspective view) after the lowering of the second closing mold and the closure of the second ring in the molding configuration for the intermediate layer.

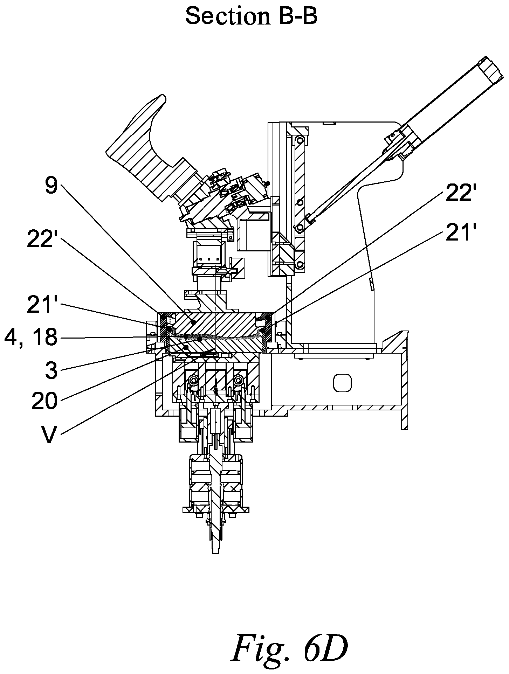

Figure 6D shows the injection molding device sectioned along line B:B of Figure 6B.

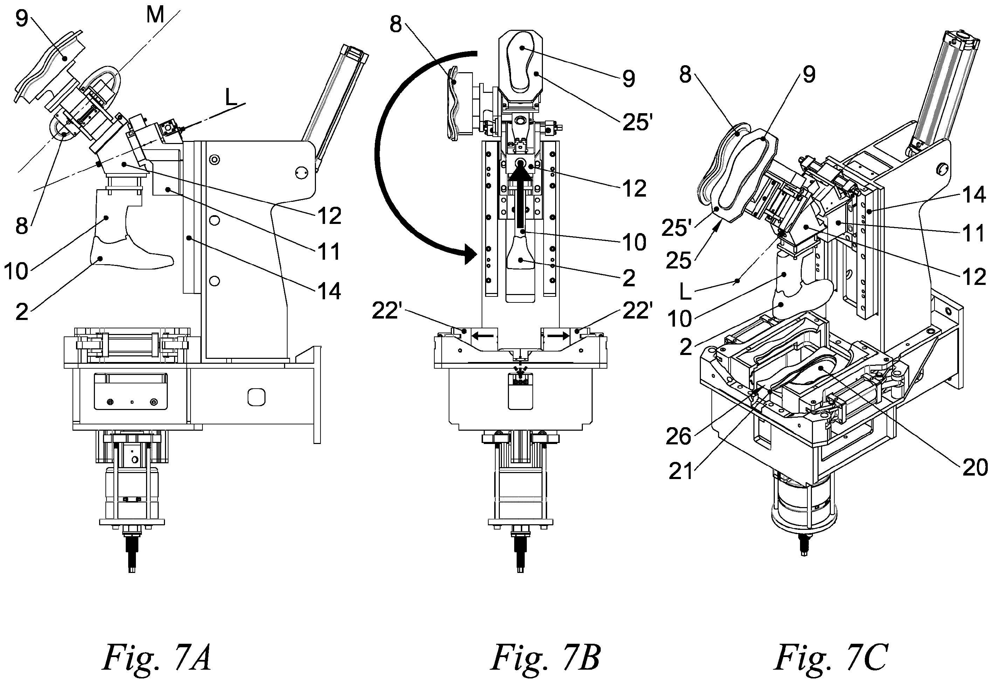

Figures 7A, 7B, and 7C show the injection molding device from three different angles (side view, front view, perspective view) after the opening of the two rings, the lifting of the second closing mold, and the rotation of the second locking part around the first rotation axis to position the third support mold vertically above the female mold.

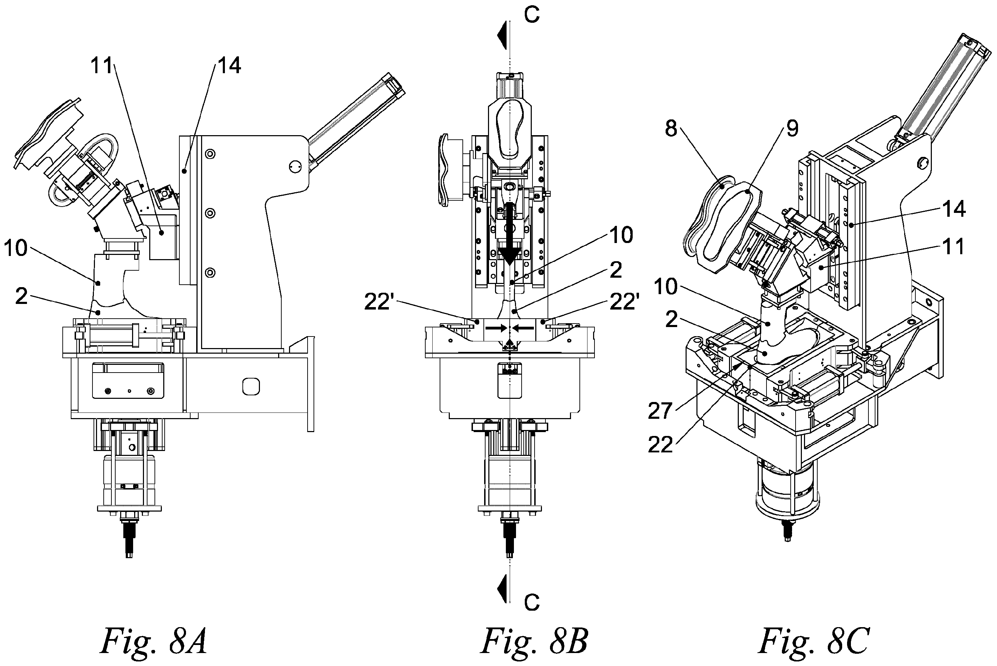

Figures 8A, 8B, and 8C show the injection molding device from three different angles (side view, front view, perspective view) after the lowering of the third support mold and the closure of the first and second rings in the molding configuration for the inner tread layer.

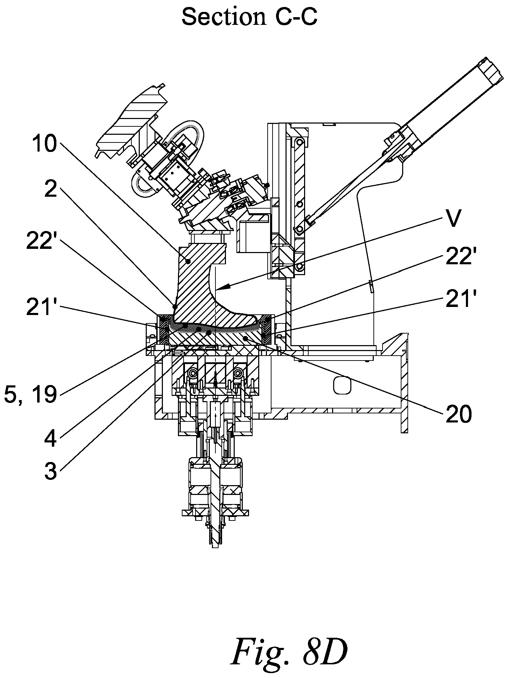

Figure 8D shows the injection molding device sectioned along line C:C of Figure 8B.

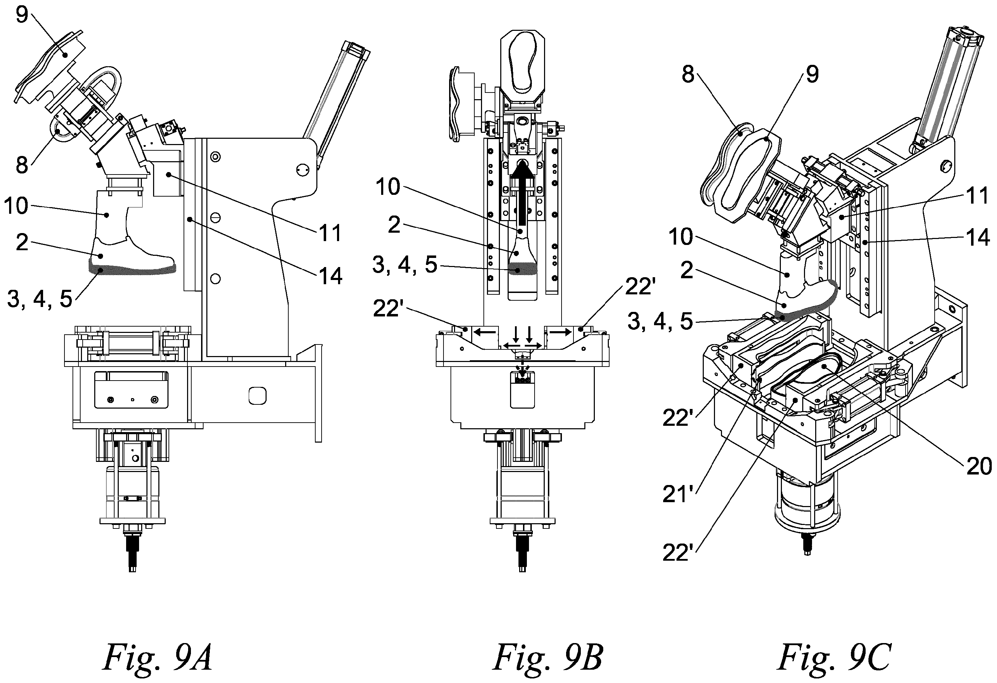

Figures 9A, 9B, and 9C show the injection molding device from three different angles (side view, front view, perspective view) after the opening of the two rings and the lifting of the third support mold.

With reference to the cited figures, an injection molding device is shown, generally indicated by reference number 1.

The injection molding device 1 enables the molding of a sole 3, 4, 5 onto the upper 2 of a shoe. The sole comprises a tread layer 3, at least one intermediate layer 4, and an inner layer 5 that is directly connected to the upper 2.

For convenience, the upper 2 has only been depicted in some of the figures.

The device 1 includes a head 7 that is mounted above actuatable means 20, 21, 22.

These means 20, 21, 22 are actuatable to define a first molding cavity 17 for the molding of the tread layer 3, a second molding cavity 18 for the molding of the intermediate layer 4, and a third molding cavity 19 for the molding of the inner layer 5.

The head 7 features a first closing mold 8 for the first molding cavity 17, a second closing mold 9 for the second molding cavity 18, and a third support mold 10 for the upper 2, which serves to close the third molding cavity 19.

The second closing mold 9 for the second molding cavity 18 has a peripheral flange 25, which includes a first surface 25' distal from the rotation axis M and a second surface 25'' proximal to the rotation axis M.

This peripheral flange 25 is particularly flat.

The head 7 also includes an articulated block 11, 12, 13, which consists of a first blocking part 11, a second blocking part 12, and a third blocking part 13.

The first blocking part 11 is supported in a sliding manner along a fixed guide 14.

In particular, the fixed guide 14 is vertical.

The second blocking part 12 is supported by the first blocking part 11 and is rotatable around a first rotation axis L.

The third blocking part 13 is supported by the second blocking part 12 and is rotatable around a second rotation axis M.

Notably, the second rotation axis M is inclined relative to the first rotation axis L.

Specifically, the second rotation axis M is horizontal.

In particular, the first rotation axis L is inclined relative to the fixed vertical guide 14 and the horizontal rotation axis M.

Specifically, the first and second rotation axes L, M lie in the same vertical plane.

The third blocking part 13 includes a first arm 15 for securing the first closing mold 8 and a second arm 16 for securing the second closing mold 9.

Notably, the first and second arms 15, 16 are mutually orthogonal.

Furthermore, the first and second arms 15, 16 extend radially from the second rotation axis M. The third support mold 10 is fixed to the second blocking part 12.

The head 7 is angularly movable around the first and second rotation axes L, M, allowing selective alignment of each molding cavity 17, 18, 19 with its corresponding closing mold 8, 9, 10.

Specifically, the head 7 can be actuated to selectively align each molding cavity 17, 18, 19 and its corresponding closing mold 8, 9, 10 along a vertical alignment axis V.

The second blocking part 12 has a first flat surface 23 and a second flat surface 24, which are diametrically opposed relative to the first rotation axis L.

The first flat surface 23 and the second flat surface 24 have first and second normal axes n1, n2, which converge at the same acute angle θ toward the first rotation axis L.

The first normal axis n1 intersects orthogonally with the second rotation axis M.

The second normal axis n2 extends along the midline axis of the third support mold 10.

The actuatable means 20, 21, 22 include a female mold 20, a first containment ring 21 for the female mold 20, and a second containment ring 22 for the first ring 21.

The female mold 20 is movable along the vertical alignment axis V.

Additionally, the female mold 20 can be coupled with the first closing mold 8 to define the first molding cavity 17.

The first ring 21 is also movable along the vertical alignment axis V.

The first ring 21 includes two movable first half-rings 21', which can be coupled with the second closing mold 9 to define the second molding cavity 18.

Notably, the two movable first half-rings 21' have an overhanging flange 26 extending from the inner perimeter of the first ring 21.

The flange 26 is designed to rest against the distal surface 25' of the peripheral flange 25 of the second closing mold 9.

This flange 26 is also flat.

The second ring 22 includes two movable second half-rings 22', which can be coupled with the upper 2, supported by the third support mold 10, to define the third molding cavity 19.

Notably, the two movable second half-rings 22' have an overhanging flange 27 extending from the inner perimeter of the second ring 22.

The flange 27 is designed to rest against the flange 26.

This flange 27 is also flat.

The two first half-rings 21' and the two second half-rings 22' are movable in parallel in the horizontal direction.

Specifically, the two first half-rings 21' and the two second half-rings 22' move in parallel in a direction perpendicular to the vertical plane in which the first and second rotation axes L, M lie.

The operation of the injection molding device 1 according to the invention is evident from the description and illustrations, and in particular, it functions as follows:

Before starting the injection molding process for a new sole 3, 4, 5 onto an upper 2, preliminary operations must be performed to correctly set up the device:
- the articulated block 11, 12, 13 is moved, using appropriate angular and linear actuators, around the rotation axes L and M and along the fixed guide 14 to position the first closing mold 8 in vertical alignment above the female mold 20.
- If closed, the first and second rings 21, 22 are opened by moving the two first movable half-rings 21' and the two second movable half-rings 22' horizontally apart.
- The female mold 20 is moved vertically until it reaches its lower limit position.

At this point, the mold closing process and the injection molding of a new sole 3, 4, 5 onto an upper 2 can begin, following these steps:
- the head 7 is moved downward along the fixed guide 14 by the first blocking part 11, bringing the first closing mold 8 closer to the female mold 20.

It is specified that the first closing mold 8 is not brought into direct contact with the female mold 20 but is left at a certain distance. However, this distance must be sufficiently small to allow the first ring 21 to close around the first closing mold 8.
- The first ring 21 is moved vertically to its upper limit position using a linear actuator.
- The two first movable half-rings 21' are closed using a linear actuator, so that the first ring 21 is secured around the female mold 20 and the first closing mold 8.
- The two second movable half-rings 22' are closed using a linear actuator, so that the second ring 22 is secured around the first ring 21.
- The female mold 20 is moved vertically upward using a linear actuator, until its peripheral edge 20' engages against the peripheral flange 8' of the first closing mold 8, forming the first molding cavity 17 between the female mold 20 and the first closing mold 8.

The first molding cavity 17 is then filled with the molding material, which can be rubber, polyurethane (PU), or thermoplastic polyurethane (TPU), to form the tread layer 3.

This operation is carried out either manually by an operator, who inserts the material into the first molding cavity 17, or automatically by a dispenser, which deposits the material.

After the material has been inserted or deposited and the tread layer 3 has been formed, the mold is opened in the following manner:
- The second ring 22 is opened.
- The first ring 21 is opened.
- The female mold 20 is moved vertically downward, with the tread layer 3 remaining inside it.
- The head 7, to which the first closing mold 8 is rigidly connected, is moved vertically upward.

The first tread layer 3 is now formed.

The third blocking part 13 is then rotated 90° around the axis M, positioning the second closing mold 9 vertically above the female mold 20, in the same location where the first closing mold 8 was previously positioned.

To prepare the device 1 for the injection process that will form the intermediate layer 4, the following procedure is followed:
- The first ring 21 is closed first.
- The first ring 21 is then lowered vertically until its flange 26 rests against the upper peripheral edge 20' of the female mold 20, ensuring a seal and preventing material leakage at the bottom of the mold.
- The head 7 is lowered, along with the second closing mold 9, to a position that allows the second ring 22 to close around the second closing mold 9.
- The outer ring 22 is closed.
- The female mold 20, along with the first ring 21, which had been positioned against each other, is raised vertically until the flange 26 of the two first movable half-rings 21' rests against the peripheral flange 25 of the second closing mold 9.

The second molding cavity 18 is then formed, where the intermediate layer 4 is injected.

This second molding cavity 18 is bounded on the top by the second closing mold 9, on the bottom by the tread layer 3, and on the sides by the first ring 21.

The material that will form the intermediate layer 4 is then injected.

To prepare the device 1 for the injection of the material that will form the inner layer 5, the upper 2 must be positioned on the third support mold 10.

The upper 2 must be pre-manufactured and ready for use.

Its placement on the third support mold 10 can occur at any time prior to this stage of the process; it does not need to be done at this exact moment.

The mold is then prepared for the injection of the material that will form the inner layer 5, following these steps:
- The second ring 22 is opened.
- The first ring 21 and the female mold 20, which remain in contact with each other, are simultaneously lowered vertically, with the two layers 3 and 4 remaining inside the female mold 20.
- The head 7 is moved vertically upward, along with the second closing mold 9.
- The second blocking part 12 is rotated 90° around axis L, positioning the third support mold 10 vertically above the female mold 20, where the second closing mold 9 was previously located.
- The head 7 is lowered vertically, along with the support mold 10, to a position that allows the second ring 22 to close around the upper 2.
- The second ring 22 is closed around the upper 2, and consequently around the support mold 10, securing both in a fixed position.
- The female mold 20, along with the first ring 21, which are still positioned against each other, is raised vertically until the peripheral flange 26 of the first ring 21 rests against the peripheral flange 27 of the second ring 22.

The third molding cavity 19 is then formed, where the inner layer 5 will be injected.

This third molding cavity 19 is bounded on the top by the upper 2 and the second ring 22, on the bottom by the intermediate layer 4, and on the sides by the first ring 21.

The material that will form the inner layer 5 is then injected.

Finally, the mold can be opened in the following way:
- The second ring 22 is opened.
- The first ring 21 is opened.
- The female mold 20 is lowered vertically, or the head 7 is raised vertically, along with the third support mold 10, or both.

At this point, the three layers 3, 4, 5 of the sole detach from the female mold 20 and remain attached to the upper 2, which is positioned on the support mold 10.

The shoe, now complete with the three-layer sole 3, 4, 5 and the upper 2, is ready and can be removed from the third support mold 10.

Modifications and variations, in addition to those already mentioned, are naturally possible, for example, by performing some operations in reverse order as described in the functional process.

It has been practically demonstrated that the injection molding device according to the invention is particularly advantageous because it allows all three molding components to be combined into a single station, significantly increasing the productivity of footwear manufacturing machinery.

This also enables automation, compactness, and simplification of the actuators of the device 1, making it much more efficient compared to the prior art.

The injection molding device, as conceived, is subject to numerous modifications and variations, all falling within the scope of the inventive concept. Additionally, all details can be replaced with technically equivalent elements.

In practice, the materials used, as well as the dimensions, can vary depending on requirements and technological advancements.

## Claims

1. Injection molding device (1) for molding a sole (3, 4, 5) onto an upper (2) of a shoe, the sole comprising a tread layer (3), at least one intermediate layer (4), and an inner layer (5) directly connected to the upper (2), said device (1) comprising a head (7) positioned above actuatable means (20, 21, 22) for defining a first molding cavity (17) for molding said tread layer (3), a second molding cavity (18) for molding said intermediate layer (4), and a third molding cavity (19) for molding said inner layer (5) **characterized in that** said head (7) includes a first closing mold (8) for said first molding cavity (17), a second closing mold (9) for said second molding cavity (18),a third support mold (10) for supporting the upper (2) and closing said third molding cavity (19), an articulated block (11, 12, 13) comprising a first blocking part (11), slidably supported along a fixed guide (14), a second blocking part (12), rotatably supported by said first blocking part (11) around a first rotation axis (L), third blocking part (13), rotatably supported by said second blocking part (12) around a second rotation axis (M), wherein said third blocking part (13) includes a first arm (15) for securing said first closing mold (8) and a second arm (16) for securing said second closing mold (9), and wherein said third support mold (10) is fixed to the second blocking part (12), said head (7) being angularly movable around said first and second rotation axes (L, M) to selectively align each molding cavity (17, 18, 19) with its corresponding closing mold (8, 9, 10).

2. Injection molding device (1) according to claim 1, **characterized in that** said second rotation axis (M) is inclined relative to said first rotation axis (L).

3. Injection molding device (1) according to any of the preceding claims, **characterized in that** said fixed guide (14) is vertical, said second rotation axis (M) is horizontal, and said first rotation axis (L) is inclined relative to said vertical fixed guide (14) and said horizontal rotation axis (M).

4. Injection molding device (1) according to any of the preceding claims, **characterized in that** said first and second rotation axes (L, M) lie in the same vertical plane.

5. Injection molding device (1) according to any of the preceding claims, **characterized in that** said first and second arms (15, 16) are mutually orthogonal.

6. Injection molding device (1) according to any of the preceding claims, **characterized in that** said first and second arms (15, 16) extend radially from said second rotation axis (M).

7. Injection molding device (1) according to any of the preceding claims, **characterized in that** said second blocking part (12) has a first flat surface (23) and a second flat surface (24), which are diametrically opposed relative to said first rotation axis (L), said first flat surface (23) and second flat surface (24) respectively having a first and second normal axis (n1, n2) that converge at the same acute angle (θ) toward said first rotation axis (L), wherein said first normal axis (n1) intersects perpendicularly with said second rotation axis (M), and said second normal axis (n2) extends along the midline axis of said third support mold (10).

8. Injection molding device (1) according to any of the preceding claims, **characterized in that** it provides a vertical alignment axis (V) to selectively align each molding cavity (17, 18, 19) with its corresponding closing mold (8, 9, 10).

9. Injection molding device (1) according to any of the preceding claims, **characterized in that** said actuatable means (20, 21, 22) comprise a female mold (20), a first containment ring (21) for said female mold (20), and a second containment ring (22) for said first ring (21) wheresaid female mold (20) is coupled with said first closing mold (8) to define said first molding cavity (17), said first ring (21) includes two first movable half-rings (21'), which are coupled with said second closing mold (9) to define said second molding cavity (18), and said second ring (22) includes two second movable half-rings (22'), which are coupled with the upper (2) supported by said third support mold (10) to define said third molding cavity (19).

10. Injection molding device (1) according to claim 9, **characterized in that** said female mold (20) is movable along said vertical alignment axis (V).

11. Injection molding device (1) according to claims 9 and 10, **characterized in that** said first ring (21) is movable along said vertical alignment axis (V).

12. Injection molding device (1) according to any of claims 9 to 11, **characterized in that** said two first movable half-rings (21') and said two second movable half-rings (22') are movable in parallel in a horizontal direction.
